# EUROPEAN PATENT APPLICATION

(11) **EP 3 316 637 A1**
(43) Date of publication of application: **02.05.2018**
(21) Application number: 15898498.9
(22) Date of filing: 17.07.2015
(51) Int. Cl.: H04W 72/04, H04W 28/16, H04W 16/14

(54) **METHOD AND APPARATUS FOR ACQUIRING CONFIGURATION INFORMATION**

(71) Applicant: Huawei Technologies Co., Ltd., Longgang District Shenzhen, Guangdong 518129 (CN)
(72) Inventor: XU, Xiuqiang, Shenzhen Guangdong 518129 (CN); CHEN, Yan, Shenzhen Guangdong 518129 (CN); LIU, Yalin, Shenzhen Guangdong 518129 (CN)
(74) Representative: Gill Jennings & Every LLP
(86) International application number: PCT/CN2015/084365
(87) International publication number: WO 2017/011942

(57) **Abstract**

The present invention discloses a method and an apparatus for obtaining configuration information of a grant-free transmission unit. The method includes: sending, by a first network device, configuration information of one or more grant-free transmission units of the first network device to a second network device, where the grant-free transmission unit indicates a transmission resource used for grant-free transmission, and the configuration information of the grant-free transmission unit includes at least one or more of the following information: information about the grant-free transmission unit or information about a grant-free transmission unit control mechanism; and receiving, by the second network device, the configuration information of the grant-free transmission unit of the first network device. Therefore, by using the method and the apparatus for obtaining configuration information of a grant-free transmission unit, a network device obtains configuration information of a grant-free transmission unit of another network device.

## Description

### TECHNICAL FIELD

The present invention relates to the communications field, and more specifically, to a method and an apparatus for obtaining configuration information.

### BACKGROUND

In an existing cellular communications system, such as a Global System for Mobile Communications (English: Global System for Mobile Communication, GSM for short) system, a Wideband Code Division Multiple Access (English: Wideband Code Division Multiple Access, WCDMA for short) system, or a Long Term Evolution (English: Long Term Evolution, LTE for short) system, voice communication and data communication are mainly supported. Generally, a quantity of connections supported by a conventional base station is limited, and this is easy to implement.

A next-generation mobile communications system not only supports conventional communication, but also supports M2M (English: Machine to Machine) communication, or known as MTC (English: Machine Type Communication) communication. It is predicted that a quantity of MTC devices connected to networks will be 50 billion to 100 billion in 2020. For M2M, because of its diversified types of services, requirements for networks are greatly different. Roughly, there may exist the following several requirements:
reliable but latency insensitive transmission; and
highly reliable and low-latency transmission.

A service requiring reliable latency-insensitive transmission is relatively easy to deal with. However, for a service requiring highly reliable and low latency transmission, such as a V2V (English: Vehicle to Vehicle) service, it is required that a transmission latency should be low and transmission should be reliable. If transmission is unreliable, retransmission will be caused. As a result, a transmission latency is excessively high, and requirements cannot be met.

Existence of a large quantity of connections makes a future wireless communications system differ greatly from an existing communications system. Because of the large quantity of connections, more resources need to be consumed for terminal device access, and more resources need to be consumed for data transmission of a terminal device and transmission of related scheduling signaling.

Therefore, a grant-free transmission method is proposed, so that a latency can be reduced and reliable transmission can be met at least to some extent, or even high reliability can be achieved by means of solution design.

However, in the prior art, there is no solution of configuring grant-free transmission resources and obtaining related information.

### SUMMARY

In view of this, embodiments of the present invention provide a method and an apparatus for obtaining configuration information of a grant-free transmission unit.

According to a first aspect, a method for obtaining configuration information of a grant-free transmission unit is provided, where the method includes: sending, by a first network device, configuration information of one or more grant-free transmission units of the first network device to a second network device, where the grant-free transmission unit indicates a transmission resource used for grant-free transmission, and the configuration information of the grant-free transmission unit includes at least one or more of the following information: information about the grant-free transmission unit or information about a grant-free transmission unit control mechanism; and receiving, by the second network device, the configuration information of the grant-free transmission unit of the first network device, where the information about the grant-free transmission unit is one or more of the following information: time-domain resource information, frequency-domain resource information, space-domain resource information, code-domain resource information, or pilot resource information; and the information about the grant-free transmission unit control mechanism is one or more of the following information: uplink power control information, modulation and coding scheme information, or retransmission mechanism information.

According to a second aspect, an apparatus for obtaining configuration information of a grant-free transmission unit is provided, where the apparatus includes a receiver, and the receiver is configured to receive configuration information of one or more grant-free transmission units of one or more network devices, where the grant-free transmission unit indicates a transmission resource used for grant-free transmission, and the configuration information of the grant-free transmission unit includes at least one or more of the following information: information about the grant-free transmission unit or information about a grant-free transmission unit control mechanism, where the information about the grant-free transmission unit is one or more of the following information: time-domain resource information, frequency-domain resource information, space-domain resource information, code-domain resource information, or pilot resource information; and the information about the grant-free transmission unit control mechanism is one or more of the following information: uplink power control information, modulation and coding scheme information, or retransmission mechanism information.

According to a third aspect, an apparatus for obtaining configuration information of a grant-free transmission unit is provided, where the apparatus includes a transmitter, and the transmitter is configured to send configuration information of one or more grant-free transmission units of the apparatus, where the grant-free transmission unit indicates a transmission resource used for grant-free transmission, and the configuration information of the grant-free transmission unit includes at least one or more of the following information: information about the grant-free transmission unit or information about a grant-free transmission unit control mechanism, where the information about the grant-free transmission unit is one or more of the following information: time-domain resource information, frequency-domain resource information, space-domain resource information, code-domain resource information, or pilot resource information; and the information about the grant-free transmission unit control mechanism is one or more of the following information: uplink power control information, modulation and coding scheme information, or retransmission mechanism information.

Based on the foregoing technical solutions, according to the method and the apparatus for obtaining configuration information in the embodiments of the present invention, the first network device sends the configuration information of the grant-free transmission unit of the first network device to the second network device, so that the second network device can obtain the configuration information of the grant-free transmission unit of the first network device.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a schematic flowchart of a method for obtaining configuration information of a grant-free transmission unit according to an embodiment of the present invention;
FIG. 3 is another schematic flowchart of a method for obtaining configuration information of a grant-free transmission unit according to an embodiment of the present invention;
FIG. 4 is another schematic flowchart of a method for obtaining configuration information of a grant-free transmission unit according to an embodiment of the present invention;
FIG. 5A and FIG. 5B are schematic flowcharts of two response modes in a method for obtaining configuration information of a grant-free transmission unit according to an embodiment of the present invention;
FIG. 6A and FIG. 6B each are a schematic principle diagram of orthogonality of resources according to an embodiment of the present invention;
FIG. 7A and FIG. 7B each are a schematic principle diagram of user scheduling according to an embodiment of the present invention;
FIG. 8 is a schematic block diagram of an apparatus for obtaining configuration information of a grant-free transmission unit according to an embodiment of the present invention; and
FIG. 9 is another schematic block diagram of an apparatus for obtaining configuration information of a grant-free transmission unit according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

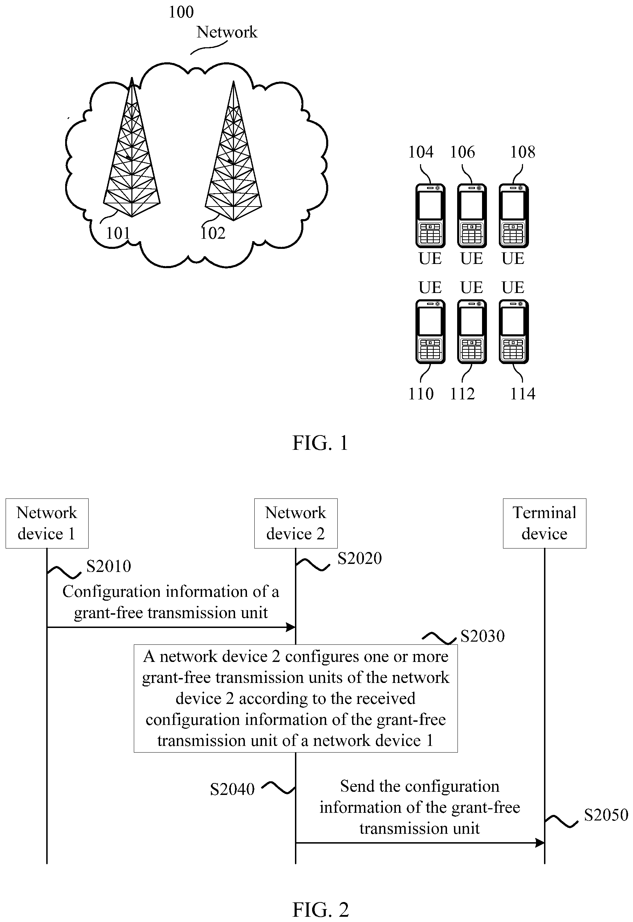

FIG. 1 provides a simplified schematic network diagram. In a network 100, for example, there are two network devices: a network device 101 and a network device 102. The network devices 101 and 102 are connected in a wireless or wired manner, or in another manner. A network device, such as the network device 102, is connected to several terminal devices, such as terminal devices 104 to 114 (which is referred to as UE for short in the figure) in a wireless or wired manner, or in another manner. Certainly, a network device, such as the network device 101, may also be connected to several terminal devices, and this is not shown in the figure.

A network in this patent may be a public land mobile network (English: Public Land Mobile Network, PLMN for short), a D2D network, an M2M network, an MTC network, or another network. FIG. 1 is merely an example of a simplified schematic diagram. The network may further include another access device that is not graphed in FIG. 1, and in addition to the network devices 101 and 102 as examples, a quantity of network devices is not limited.

A centrally configured network element in this patent application may be a mobility management entity (English: Mobile Managenment Entity, MME for short), a serving gateway (English: Service-Gateway, S-GW for short), a packet data network gateway (English: Packet Data Network-Gateway, PDN-GW for short), or another network device, or may serve as a logical function node that is located in a network element on a core network, an access network, or another network level.

The terminal device in this patent application may also be user equipment (English: User Equipment, UE for short), an access terminal, a subscriber unit, a subscriber station, a mobile site, a mobile station, a remote station, a remote terminal, a mobile device, a user terminal, a terminal, a wireless communications device, a user agent, or a user apparatus. The access terminal may be a cellular phone, a cordless phone, a Session Initiation Protocol (English: Session Initiation Protocol, SIP for short) phone, a wireless local loop (English: Wireless Local Loop, WLL for short) station, a personal digital assistant (English: Personal Digital Assistant, PDA for short), a handheld device with a wireless communication function, a computing device, another processing device connected to a wireless modem, an in-vehicle device, a wearable device, a terminal device in a future 5G network, a terminal device in a future evolved PLMN network, or the like.

An access device in this patent application may be a device configured to perform communication with a terminal device. The access device may be a BTS (English: Base Transceiver Station) in GSM or Code Division Multiple Access (English: Code Division Multiple Access, CDMA for short), an NB (English: NodeB) in WCDMA, a baseband processing unit (English: Base Band Unit, BBU for short) set (certainly, a person skilled in the art may know that the BBU set may be in another name) in a cloud radio access network (English: Cloud Radio Access Network, CRAN for short) scenario, an eNB or eNodeB (English: Evolutional Node B) or an access point in LTE, an in-vehicle device, a wearable device, a network-side device in a future 5G network, or an access device in a future evolved PLMN network.

To deal with a large quantity of MTC services on a network in future, or to satisfy highly reliable and low latency service transmission, this patent proposes a grant-free transmission solution. Grant-free transmission may be expressed as grant free in English. Grant-free transmission may be understood as any one or more of the following meanings, or a combination of some technical features in the multiple meanings, or a similar meaning.

The grant-free transmission may mean: An access device pre-allocates multiple transmission resources and notifies a terminal device of the multiple transmission resources; when there is an uplink data transmission requirement, the terminal device selects at least one transmission resource from the multiple transmission resources pre-allocated by the access device, and uses the selected transmission resource to send uplink data; and the access device detects, on one or more of the multiple pre-allocated transmission resources, the uplink data sent by the terminal device. The detection may be blind detection, may be performed according to a control field in the uplink data, or may be detection performed in another manner.

The grant-free transmission may mean: An access device pre-allocates multiple transmission resources and notifies a terminal device of the multiple transmission resources, so that when there is an uplink data transmission requirement, the terminal device selects at least one transmission resource from the multiple transmission resources pre-allocated by the access device, and uses the selected transmission resource to send uplink data.

The grant-free transmission may mean: Information about multiple pre-allocated transmission resources is obtained; and when there is an uplink data transmission requirement, at least one transmission resource is selected from the multiple transmission resources, and uplink data is sent by using the selected transmission resource. An obtaining manner may be obtaining the information about multiple pre-allocated transmission resources from an access device.

The grant-free transmission may mean a method for implementing uplink data transmission of a terminal device without dynamic scheduling performed by an access device, where the dynamic scheduling may be a scheduling manner in which the access device indicates, by using signaling, a transmission resource for each uplink data transmission of the terminal device. Optionally, implementing uplink data transmission of a terminal device may be understood as follows: At least two terminal devices are allowed to perform uplink data transmission on a same time-frequency resource. Optionally, the transmission resource may be a transmission resource in one or more transmission time units following a time point at which UE receives the signaling. One transmission time unit may be a minimum time unit of one transmission, for example, a TTI (English: Transmission Time Interval), and its value may be 1 ms, or a transmission time unit may be a preset transmission time unit.

The grant-free transmission may mean: A terminal device performs uplink data transmission without a grant from an access device. The grant may mean: A terminal device sends an uplink scheduling request to an access device, and after receiving the scheduling request, the access device sends an uplink grant to the terminal device, where the uplink grant is used to indicate an uplink transmission resource allocated to the terminal device.

The grant-free transmission may mean a contention-based transmission mode, and may specifically mean: Multiple terminals simultaneously perform uplink data transmission on a same pre-allocated time-frequency resource without a grant from a base station.

The data may include service data or signaling data.

The blind detection may be understood as detection performed, when it is unknown in advance whether there is data that is to arrive, on data that may arrive. The blind detection may also be understood as detection performed without an explicit signaling indication.

The foregoing transmission resource may include but be not limited to one or a combination of the following resources:
a time-domain resource, such as a radio frame, a subframe, and a symbol;
a frequency-domain resource, such as a subcarrier and a resource block;
a space-domain resource, such as a transmit antenna and a beam;
a code-domain resource, such as a sparse code multiple access (English: Sparse Code Multiple Access, SCMA for short) codebook, a low density signature (English: Low Density Signature, LDS for short) sequence, or a CDMA code; or
a pilot resource.

The foregoing grant-free transmission may be used for transmission performed according to one or more of the following control mechanisms, including but not limited to:
uplink power control, such as upper limit control of an uplink transmit power;
modulation and coding scheme setting, such as transport block size setting, code rate setting, or modulation order setting; or
a retransmission mechanism, such as a HARQ mechanism.

A grant-free transmission unit may be a basic transmission resource for grant-free transmission, or may be one or a combination of the following resources used for grant-free transmission:
a time-domain resource, such as a radio frame, a subframe, and a symbol;
a frequency-domain resource, such as a subcarrier, a resource block, or a subband;
a space-domain resource, such as a transmit antenna and a beam;
a code-domain resource, such as a sparse code multiple access (English: Sparse Code Multiple Access, SCMA for short) codebook, a low density signature (English: Low Density Signature, LDS for short) sequence, or a CDMA code; or
a pilot resource.

Certainly, a grant-free transmission unit may be known as another name by a person skilled in the art.

The application with Patent No. PCT/CN2014/073084 and entitled "SYSTEM AND METHOD FOR UPLINK GRANT-FREE TRANSMISSION SCHEME" provides a technical solution of uplink grant-free transmission. Content of the application PCT/CN2014/073084 may also be understood as a part incorporated into content of the embodiments of the present invention by reference, and details are not described.

Generally, one or more grant-free transmission units are configured for an access device, to perform grant-free data transmission better. In addition, optionally, a grant-free transmission unit may be for a cell, that is, a grant-free transmission unit of an access device may be understood as a grant-free transmission unit in one or more cells managed by the access device, and that a grant-free transmission unit is configured for an access device may be understood as that an access device configures a grant-free transmission unit for a cell managed by the access device.

Configuration information of the grant-free transmission unit may include but be not limited to information about the grant-free transmission unit or information about a grant-free transmission unit control mechanism.

The information about the grant-free transmission unit includes but is not limited to one or more of the following information:
time-domain resource information, such as radio frame information, subframe information, and symbol information;
frequency-domain resource information, such as subcarrier information, resource block information, and subband information;
space-domain resource information, such as transmit antenna information and beam information;
code-domain resource information, such as SCMA codebook information, LDS sequence information, and CDMA code information; or
pilot resource information.

The information about the grant-free transmission unit control mechanism includes but is not limited to one or more of the following information:
modulation and coding scheme information, such as transport block size information, code rate information, and modulation order information;
uplink power control information, such as upper limit information of uplink transmit power; or
retransmission mechanism information, such as HARQ information.

The foregoing information may be understood as information in any form, and may be a specific value, an index, or indication information in another form.

The foregoing descriptions may be applicable to the following embodiments.

In the following multiple embodiments, a network device 1 may be understood as a first network device, and a network device 2 may be understood as a second network device. The network device 1 may be a network device adjacent to the network device 2. Adjacent may be understood as connected, geographically close, or the like. Other parts in the embodiments may be understood in a similar way, and details are not further described.

The following describes an embodiment of the present invention with reference to FIG. 2.

S2010: One or more network devices 1 (a case of multiple network devices 1 is not shown in FIG. 2) send configuration information of one or more grant-free transmission units of the one or more network devices 1 to a network device 2. "More" in "one or more" described in this application may be understood as two, three, or more, and a quantity of grant-free transmission units of one network device 1 may be one or more. Other parts in this embodiment may be understood in a similar way, and details are not further described.

S2020: The network device 2 receives the configuration information of the one or more grant-free transmission units of the one or more network devices 1.

S2030: The network device 2 configures a grant-free transmission unit of the network device 2 according to the received configuration information of the grant-free transmission unit of the one or more network devices 1, where the configuration may be initial configuration, or reconfiguration of an existing grant-free transmission unit of the network device 2, and this step is optional.

S2040: The network device 2 notifies one or more terminal devices (a case of multiple terminal devices 2 is not shown in FIG. 2) of the configuration information of the grant-free transmission unit of the network device 2. Optionally, a notification manner may be a broadcast notification manner, a directional notification manner, or another manner. The terminal device may be a terminal device within a coverage area of the network device 2. The terminal device within the coverage area of the network device 2 may be understood as a terminal device within a coverage area managed by the network device 2, or a terminal device within an area covered by signals of the network device 2 or another device connected to the network device 2. Other parts about a coverage area of a network device in this embodiment of this application may be understood in a similar way, and details are not further described. Optionally, the notification may be provided by sending a message directly over an air interface. For example, the notification may be provided by using a control signaling message. Alternatively, the notification may be indirectly provided, that is, may be provided by sending a message over an air interface by using another network element. This word in other parts of this application may be understood in a similar way, and details are not further described. This step is optional.

S2050: The one or more terminal devices receive the configuration information, notified by the network device 2, of the grant-free transmission unit. This step is optional.

The embodiment described in FIG. 2 includes at least a technical solution to two technical problems. One technical problem is how to obtain configuration information of a grant-free transmission unit, and another technical problem is how to configure a grant-free transmission unit of a network device 2. Therefore, it may be understood that FIG. 2 includes two embodiments: a method for obtaining configuration information of a grant-free transmission unit and a method for configuring a grant-free transmission unit.

The following further describes a method for obtaining configuration information of a grant-free transmission unit.

The technical problem of how to obtain configuration information of a grant-free transmission unit may be resolved by performing S2010 and S2020.

In this embodiment, one or more network devices 1 may periodically or aperiodically send configuration information of a grant-free transmission unit to the network device 2. The grant-free transmission unit indicates a transmission resource used for grant-free transmission, and may be a basic transmission resource for grant-free transmission. The configuration information of the grant-free transmission unit includes at least one or more of the following information: information about the grant-free transmission unit or information about a grant-free transmission unit control mechanism. The network device 2 receives the configuration information of the grant-free transmission unit of the one or more network devices 1. The information about the grant-free transmission unit is one or more of the following information: time-domain resource information, frequency-domain resource information, space-domain resource information, code-domain resource information, or pilot resource information. The information about the grant-free transmission unit control mechanism is one or more of the following information: uplink power control information, modulation and coding scheme information, or retransmission mechanism information.

A network device (for example, the network device 2) receives configuration information of a grant-free transmission unit of another network device (for example, the one or more network devices 1), so as to obtain the configuration information of the grant-free transmission unit of the another network device.

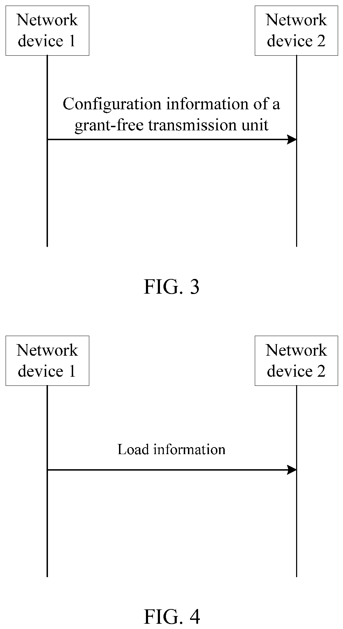

An optional embodiment is shown in FIG. 3. Optionally, in this embodiment, the configuration information of the grant-free transmission unit that is sent by the one or more network devices 1 may be sent after being carried in a load information (English: LOAD INFORMATION) message. In this way, load information that is required to be transferred in grant-free transmission and other transmission may be carried in one message, thereby reducing signaling overheads. The load information message may alternatively have another name, and this is merely an example herein. A grant-free transmission unit may be GFTU for short. Certainly, another English description and English abbreviation may be used by a person skilled in the art. The understandings on the grant-free transmission unit are the same in other parts of this application, and details are not further described. The load information message may use the following message formats as examples:

**LOAD INFORMATION:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | ignore |
| Cell Information | M | | | | YES | ignore |
| >**Cell Information Item** | | *1*.. *<maxCell ineNB>* | | | EACH | ignore |
| >>Cell ID | M | | ECGI 9.2.14 | Id of the source cell | - | - |
| >>UL Interference Overload Indication | O | | 9.2.17 | | - | - |
| >>**UL High Interference Information** | | *0*.. *<maxCell ineNB>* | | | - | - |
| >>>Target Cell ID | M | | ECGI 9.2.14 | Id of the cell for which the HII is meant | - | - |
| >>>UL High Interference Indication | M | | 9.2.18 | | - | - |
| >>Relative Narrowband Tx Power (RNTP) | O | | 9.2.19 | | - | - |
| >>ABS Information | O | | 9.2.54 | | YES | ignore |
| >>Invoke Indication | O | | 9.2.55 | | YES | ignore |
| >>**GFTU** Information | O | | 9.2.yy | | YES | ignore |

9.2.yy is used as an example of a section, and yy may indicate a value. In addition, in this example, configuration information of a grant-free transmission unit of a cell managed by the network device 1 is provided by using a cell as a unit. Certainly, in implementation, configuration information may be provided not by using a cell as a unit. For a similar manner and a similar understanding in the following, details are not further described.

A format of a grant-free transmission unit information message may be as follows.

**9.2.yy GFTU Information**

| **IE/Group Name** | **Presence** | **Range** | **IE type and reference** | **Semantics description** |
|---|---|---|---|---|
| CHOICE ***GFTU** Information* | M | | - | - |
| **>*****GFTU** Configuration* | M | 1.. max**GFTU** inCell | | |
| >>*FDD* | | | - | - |
| >>>*Time Domain Info* | M | | BIT STRING (SIZE(Tl)) | Each position in the bitmap represents a subframe, for which value " 1" indicates **GFTU** is located in the corresponding subframe and value "0" indicates **GFTU** is located in the corresponding subframe. |
| | | | | The first position of the Time Domain Info corresponds to subframe 0 in a radio frame where *SFN* = 0. The Time Domain Info is continuously repeated in all radio frames. |
| | | | | The maximum number of subframes is Tl. |
| >>>*Frequency Domain Info* | M | | BIT STRING (SIZE(F1)) | Each position in the bitmap represents a RB, for which value "1" indicates the corresponding RB is allocated to **GFTU** and value "0" indicates the corresponding RB is not allocated to **GFTU.** |
| | | | | The first position of the Frequency Domain Info corresponds to the lowest indexed RB of the bandwidth. |
| | | | | |
| >*TDD* | | | - | - |
| >>>*Time Domain Info* | M | | BIT STRING (1..T2) | Each position in the bitmap represents a subframe, for which value " 1" indicates **GFTU** is located in the corresponding subframe and value "0" indicates **GFTU** is located in the corresponding subframe. |
| | | | | The first position of the Time Domain Info corresponds to subframe 0 in a radio frame where *SFN* = 0. The Time Domain Info is continuously repeated in all radio frames. |
| | | | | The maximum number of subframes is T2. |
| >>>*Frequency Domain Info* | M | | BIT STRING (SIZE(F2)) | Each position in the bitmap represents a RB, for which value "1" indicates the corresponding RB is allocated to **GFTU** and value "0" indicates the corresponding RB is not allocated to **GFTU.** |
| | | | | The first position of the Frequency Domain Info corresponds to the lowest indexed RB of the bandwidth. |

Optionally, as shown in FIG. 4, in this embodiment, the configuration information of the grant-free transmission unit that is sent by the one or more network devices 1 may be sent after being carried in a resource status update (English: RESOURCE STATUS UPDATE) message. The resource status update message may alternatively have another name, and this is merely an example. In this way, a resource status that is required to be transferred in grant-free transmission and other transmission may be carried in one message, thereby reducing signaling overheads.

Optionally, before the one or more network devices 1 send the configuration information of the grant-free transmission unit to the network device 2, the network device 2 sends, to the network device 1, a message for requesting the configuration information of the grant-free transmission unit, and the message for requesting the configuration information of the grant-free transmission unit is used to request the network device 1 to send the configuration information of the grant-free transmission unit to the network device 2. A specific implementation may be as follows: The network device 2 sends a resource status request (English: RESOURCE STATUS REQUEST) message to the one or more network devices 1, and the message is used to request the one or more network devices 1 to send resource status information including the configuration information of the one or more grant-free transmission units to the network device 2.

Further, optionally, in this embodiment, the network device 2 may request the one or more network devices 1 to periodically or aperiodically send a resource status update message. The one or more network devices 1 may periodically or aperiodically send a resource status update message to the network device 2 according to the request from the network device 2, and aperiodically sending the resource status update message to the network device 2 may be triggered based on an event.

In this embodiment, possible protocol expression forms of the resource status request message and the resource status update message in the technical solutions of the present invention may be as follows.

**RESOURCE STATUS REQUEST:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | rej ect |
| eNB1 Measurement ID | M | | INTEGER (1..4095,...) | Allocated by eNB₁ | YES | reject |
| eNB2 Measurement ID | C-ifRegis trationRe questStop | | INTEGER (1..4095,...) | Allocated by eNB₂ | YES | ignore |
| Registration Request | M | | ENUMERAT ED (start, stop, ...) | A value set to "stop", indicates a request to stop all cells measurements. | YES | reject |
| Report Characteristics | O | | BIT STRING (SIZE(32)) | Each position in the bitmap indicates measurement object the eNB₂ is requested to report. | YES | reject |
| | | | | First Bit = PRB Periodic, Second Bit= TNL load Ind Periodic, Third Bit = HW Load Ind Periodic, Fourth Bit = Composite Available Capacity Periodic, Fifth Bit = ABS Status Periodic, **Sixth Bit = GFTU Status Periodic.** Other bits shall be ignored by the eNB₂ | | |
| **Cell To Report** | | *1* | | Cell ID list for which measurement is needed | YES | ignore |
| >**Cell To Report Item** | | *1*.. *<max Celline NB>* | | | EACH | ignore |
| >>Cell ID | M | | ECGI 9.2.14 | | - | - |
| Reporting Periodicity | O | | ENUMERAT ED (1000ms, 2000ms, 5000ms, 1000 0ms, ...) | | YES | ignore |
| Partial Success Indicator | O | | ENUMERAT ED (partial success allowed,...) | Included if partial success is allowed. | YES | ignore |

**RESOURCE STATUS UPDATE:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | ignore |
| eNB1 Measurement ID | M | | INTEGER (1..4095,...) | Allocated by eNB₁ | YES | reject |
| eNB2 Measurement ID | M | | INTEGER (1..4095,...) | Allocated by eNB₂ | YES | reject |
| **Cell Measurement Result** | | *1* | | | YES | ignore |
| >**Cell Measurement Result Item** | | *1*.. *<maxCell ineNB>* | | | EACH | ignore |
| >>Cell ID | M | | ECGI | | | |
| | | | 9.2.14 | | | |
| >>Hardware Load Indicator | O | | 9.2.34 | | | |
| >>S 1 TNL Load Indicator | O | | 9.2.35 | | | |
| >>Radio Resource Status | O | | 9.2.37 | | | |
| >>Composite Available Capacity Group | O | | 9.2.44 | | YES | ignore |
| >>ABS Status | O | | 9.2.58 | | YES | ignore |
| >>**GFTU Status** | **O** | | **9.2.xx** | | **YES** | **ignore** |

A format of this IE GFTU Status may be as follows:

**9.2.xx GFTU Status**

| **IE/Group Name** | **Presence** | **Range** | **IE type and reference** | **Semantics description** |
|---|---|---|---|---|
| CHOICE ***GFTU** Information* | M | | - | - |
| >***GFTU** Configuration* | M | 1.. max**GFTU** inCell | | |
| >>*FDD* | | | - | - |
| >>>*Time Domain Info* | M | | BIT STRING (SIZE(T1)) | Each position in the bitmap represents a subframe, for which value "1" indicates **GFTU** is located in the corresponding subframe and value "0" indicates **GFTU** is located in the corresponding subframe. |
| | | | | The first position of the Time Domain Info corresponds to subframe 0 in a radio frame where *SFN =* 0. The Time Domain Info is continuously repeated in all radio frames. |
| | | | | The maximum number of subframes is Tl. |
| >>>*Frequency Domain Info* | M | | BIT STRING (SIZE(F1)) | Each position in the bitmap represents a RB, for which value "1" indicates the corresponding RB is allocated to **GFTU** and value "0" indicates the corresponding RB is not allocated to **GFTU.** |
| | | | | The first position of the Frequency Domain Info corresponds to the lowest indexed RB of the bandwidth. |
| | | | | |
| >*TDD* | | | - | - |
| >>>*Time Domain Info* | M | | BIT STRING (1..T2) | Each position in the bitmap represents a subframe, for which value "1" indicates **GFTU** is located in the corresponding subframe and value "0" indicates **GFTU** is located in the corresponding subframe. |
| | | | | The first position of the Time Domain Info corresponds to subframe 0 in a radio frame where *SFN =* 0. The Time |
| | | | | Domain Info is continuously repeated in all radio frames. |
| | | | | The maximum number of subframes is T2. |
| >>>*Frequency Domain Info* | M | | BIT STRING (SIZE(F2)) | Each position in the bitmap represents a RB, for which value "1" indicates the corresponding RB is allocated to **GFTU** and value "0" indicates the corresponding RB is not allocated to **GFTU.** |
| | | | | The first position of the Frequency Domain Info corresponds to the lowest indexed RB of the bandwidth. |

Optionally, the configuration information of the grant-free transmission unit that is sent by the one or more network devices 1 may be sent after being carried in a handover request acknowledgement (English: HANDOVER REQUEST ACKNOLOGEMENT) message. The handover request acknowledgement message may alternatively have another name, so that the configuration information of the grant-free transmission unit can be carried by using signaling in a handover scenario, thereby reducing signaling overheads.

Optionally, a manner in which the handover request acknowledgement message specifically carries the configuration information of the grant-free transmission unit may be as follows: For example, the configuration information of the grant-free transmission unit is further sent after being added to a handover command (English: HANDOVER COMMAND) message. Optionally, the handover command message may carry an IE RRCCONNECTIONRECONFIGURATION and used to indicate the configuration information of the one or more grant-free transmission units of the first network device.

### HANDOVER COMMAND:

### Direction: target eNB to source eNB/ source RAN

### HandoverCommand message

```
 -- ASN1START
 HandoverCommand ::= SEQUENCE {
    criticalExtensions CHOICE {
       c1 CHOICE {
           handoverCommand-r8 HandoverCommand-r8-IEs,
           spare7 NULL,
           spare6 NULL, spare5 NULL, spare4 NULL,
           spare3 NULL, spare2 NULL, spare 1 NULL
       criticalExtensionsFuture SEQUENCE {}
 }
 HandoverCommand-r8-IEs ::= SEQUENCE {
    handoverCommandMessage OCTET STRING (CONTAINING DL-DCCH-Message),
 } nonCriticalExtension SEQUENCE {} OPTIONAL
 -- ASN1STOP
```

### HandoverCommand field descriptions

### handoverCommandMessage

Contains the entire DL-DCCH-Message including the *RRCConnectionReconfiguration* message used to perform handover to E-UTRAN, generated (entirely) by the target eNB.

GFTU-InfoList is carried in RRCCONNECTIONRECONFIGURATION and is used to notify the network device 2 of the configuration information of the one or more grant-free transmission units of the network device 1. A possible form of GFTU-InfoList is as follows:

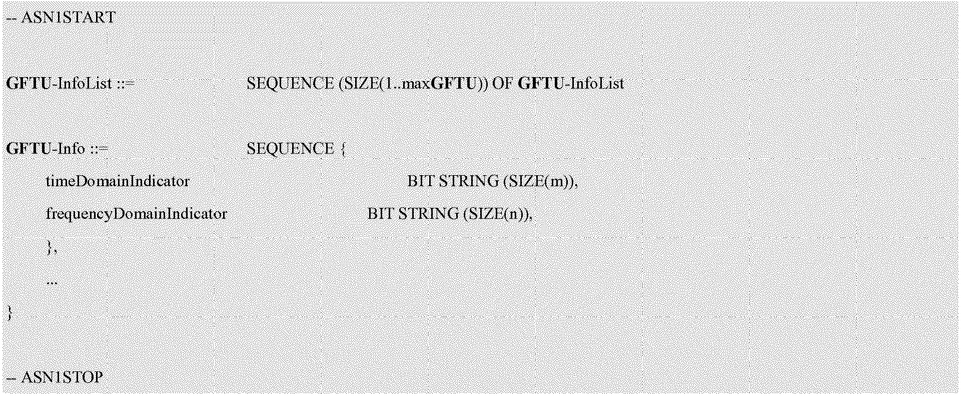

Optionally, before the one or more network devices 1 send the handover request acknowledgement message to the one or more network devices 2, the message, sent by the network device 2 and received by the network device 1, for requesting the configuration information of the grant-free transmission unit may be a handover request (English: HANDOVER REQUEST) message, and the handover request message is used to request to hand over a terminal device from the network device 2 to the network device 1. The handover request message may alternatively have another name. Optionally, the handover request message may carry information about the terminal device's capability of supporting grant-free transmission, to notify the network device 1 of a capability of supporting grant-free transmission by the to-be-handed-over terminal device. The handover request message may further carry information indicating that the terminal device uses a grant-free transmission mode, to notify the network device 1 that the to-be-handed-over terminal device is using or will use the grant-free transmission mode.

Protocol expression forms of the handover request message and the handover request acknologement message are as follows:

**HANDOVER REQUEST:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Old eNB UE X2AP ID | M | | eNB UE X2AP ID 9.2.24 | Allocated at the source eNB | YES | reject |
| Cause | M | | 9.2.6 | | YES | ignore |
| Target Cell ID | M | | ECGI 9.2.14 | | YES | reject |
| GUMMEI | M | | 9.2.16 | | YES | reject |
| **UE Context Information** | | *1* | | | YES | reject |
| >MME UE S1AP ID | M | | INTEGER (0..2³² -1) | MME UE S1AP ID allocated at the MME | - | - |
| >UE Security Capabilities | M | | 9.2.29 | | - | - |
| >AS Security Information | M | | 9.2.30 | | - | - |
| >UE Aggregate Maximum Bit Rate | M | | 9.2.12 | | - | - |
| >Subscriber Profile ID for RAT/Frequency priority | O | | 9.2.25 | | - | - |
| >**E-RABs To Be Setup List** | | *1* | | | - | - |
| >>**E-RABs To Be Setup Item** | | *1* .. *<maxnoof Bearers>* | | | EACH | ignore |
| >>>E-RAB ID | M | | 9.2.23 | | - | - |
| >>>E-RAB Level QoS Parameters | M | | 9.2.9 | Includes necessary QoS parameters | - | - |
| >>>DL Forwarding | O | | 9.2.5 | | - | - |
| >>>UL GTP Tunnel Endpoint | M | | GTP Tunnel Endpoint 9.2.1 | SGW endpoint of the S1 transport bearer. For delivery of UL PDUs. | - | - |
| >RRC Context | M | | OCTET STRING | Includes the RRC Handover Preparation Information message as defined in subclause 10.2.2 of TS 36.331 [9]. | - | - |
| >Handover Restriction List | O | | 9.2.3 | | - | - |
| >Location Reporting Information | O | | 9.2.21 | Includes the necessary parameters | - | - |
| | | | | for location reporting | | |
| >Management Based MDT Allowed | O | | 9.2.59 | | YES | ignore |
| UE History Information | M | | 9.2.38 | Same definition as in TS 36.413 [4]. | YES | ignore |
| Grant-Free Transmission Information | O | | 9.2.mm | | YES | ignore |
| Trace Activation | O | | 9.2.2 | | YES | ignore |
| SRVCC Operation Possible | O | | 9.2.33 | | YES | ignore |
| CSG Membership Status | O | | 9.2.52 | | YES | reject |

9.2.mm may be in the following form:

| **IE/Group Name** | **Presence** | **Range** | **IE Type and Reference** | **Semantics Description** |
|---|---|---|---|---|
| Grant-Free Transmission Information | | | ENUMERATED (yes, no,...) | |

**HANDOVER REQUEST ACKNOLOGEMENT:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Old eNB UE X2AP ID | M | | eNB UE X2AP ID 9.2.24 | Allocated at the source eNB | YES | ignore |
| New eNB UE X2AP ID | M | | eNB UE X2AP ID 9.2.24 | Allocated at the target eNB | YES | ignore |
| **E-RABs Admitted List** | | *1* | | | YES | ignore |
| > **E-RABs Admitted Item** | | *1*.. *<maxnoof Bearers>* | | | EACH | ignore |
| >> E-RAB ID | M | | 9.2.23 | | - | - |
| >> UL GTP Tunnel Endpoint | O | | GTP Tunnel Endpoint 9.2.1 | Identifies the X2 transport bearer used for forwarding of UL PDUs | - | - |
| >> DL GTP Tunnel Endpoint | O | | GTP Tunnel Endpoint 9.2.1 | Identifies the X2 transport bearer. used for forwarding of DL PDUs | - | - |
| E-RABs Not Admitted List | O | | E-RAB List 9.2.28 | a value for *E-RAB ID* shall only be present once in *E-RABs Admitted List* IE + in *E-RABs Not Admitted List* IE | YES | ignore |
| Target eNB To Source eNB Transparent Container | M | | OCTET STRING | Includes the RRC E-UTRA Handover Command message as defined in subclause 10.2.2 in TS 36.331 [9]. | YES | ignore |
| Criticality Diagnostics | O | | 9.2.7 | | YES | ignore |

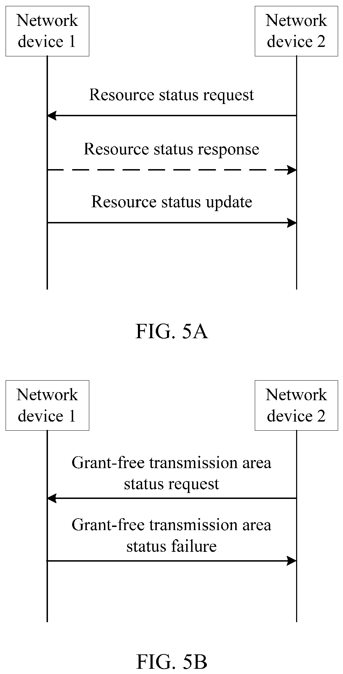

Optionally, as shown in FIG. 5A, if the one or more network devices 1 cannot send a part of the configuration information of the grant-free transmission unit to the network device 2, the one or more network devices 1 send a first response message, for example, a resource status response (English: RESOUCE STATUS RESPONSE) message, to the network device 2. The first response message is used to indicate that a part of the configuration information of the grant-free transmission unit cannot be sent, and the message may further include a reason why a part of the configuration information of the grant-free transmission unit cannot be sent, so that the network device 2 knows which configuration information of the grant-free transmission unit cannot be obtained, and optionally further knows a reason why the configuration information of the grant-free transmission unit cannot be obtained. The resouce status response message may be as follows:

**RESOURCE STATUS RESPONSE:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| eNB1 Measurement ID | M | | INTEGER (1..4095,...) | Allocated by eNB₁ | YES | rej ect |
| eNB2 Measurement ID | M | | INTEGER (1..4095,...) | Allocated by eNB₂ | YES | rej ect |
| Criticality Diagnostics | O | | 9.2.7 | | YES | ignore |
| **Measurement Initiation Result** | | *0..1* | | List of all cells in which measurement objects were requested, included when indicating partial success. | YES | ignore |
| >**Measurement Initiation Result Item** | | *1* .. *<maxCel lineNB>* | | | EACH | ignore |
| >>Cell ID | M | | ECGI 9.2.14 | | - | - |
| >>**Measurement Failure Cause List** | | *0..1* | | It indicates that eNB₂ could not initiate the measurement for at least one of the requested measurement objects in the cell. | - | - |
| >>>**Measurement** | | *1* .. | | | EACH | ignore |
| **Failure Cause Item** | | *<maxFai ledMeas Objects>* | | | | |
| >>>>Measurement Failed **Report** Characteristics | M | | BITSTRING (SIZE(32)) | Each position in the bitmap indicates measurement object that failed to be initiated in the eNB₂. First Bit = PRB Periodic, Second Bit= TNL load Ind Periodic, Third Bit = HW Load Ind Periodic, Fourth Bit = Composite Available Capacity Periodic, Fifth Bit = ABS Status Periodic, Sixth Bit = GFTU Status Periodic. Other bits shall be ignored by the eNB₁. | - | - |
| >>>>Cause | M | | 9.2.6 | Failure cause for measurement objects for which the measurement cannot be initiated. | - | - |

Optionally, as shown in FIG. 5B, if the one or more network devices 1 cannot send all of the configuration information of the grant-free transmission unit to the network device 2, the one or more network devices 1 send a second response message, for example, feed back a resource status failure (English: RESOUCE STATUS FAILURE) message, to the network device 2. Optionally, "cannot send all of the configuration information of the grant-free transmission unit to the network device 2" herein may mean: A resource status failure message is fed back provided that the configuration information of the grant-free transmission unit is carried in a resource status update message and other information that may be carried in the resource status update message that is fed back cannot be provided. The second response message is used to indicate that all of the configuration information of the grant-free transmission unit cannot be sent, and may be further used to notify a reason why all of the configuration information of the grant-free transmission unit cannot be sent, that is, the second response message may include the reason why all of the configuration information of the grant-free transmission unit cannot be sent.

The resouce status failure message may be as follows:

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | rej ect |
| eNB1 Measurement ID | M | | INTEGER (1..4095,...) | Allocated by eNB₁ | YES | reject |
| eNB2 Measurement ID | M | | INTEGER (1..4095,...) | Allocated by eNB₂ | YES | reject |
| Cause | M | | 9.2.6 | Ignored by the receiver when the Complete Failure Cause Information IE is included. | YES | ignore |
| **Criticality** Diagnostics | O | | 9.2.7 | | YES | ignore |
| **Complete Failure Cause Information** | | *0..1* | | Complete list of failure causes for all requested cells. | YES | ignore |
| >**Complete Failure Cause Information Item** | | *1* .. *<maxCel lineNB>* | | | EACH | ignore |
| >>Cell ID | M | | ECGI 9.2.14 | | - | - |
| >>**Measurement Failure Cause List** | | *1* | | | - | - |
| >>>**Measurement Failure Cause Item** | | *1* .. *<maxFai ledMeas Objects>* | | | EACH | ignore |
| >>>>Measurement Failed Report Characteristics | M | | BITSTRING (SIZE(32)) | Each position in the bitmap indicates | - | - |
| | | | | measurement object that failed to be initiated in the eNB₂. First Bit = PRB Periodic, Second Bit= TNL load Ind Periodic, Third Bit = HW Load Ind Periodic, Fourth Bit = Composite Available Capacity Periodic, Fifth Bit = ABS Status Periodic. Sixth Bit = GFTA Status Periodic. Other bits shall be ignored by the eNB₁. | | |
| >>>>Cause | M | | 9.2.6 | Failure cause for measurements that cannot be initiated. | - | - |

The following describes a method for configuring a grant-free transmission unit.

This technical problem may be an independent technical problem and constitute an independent technical solution, or may be a technical problem to be further resolved based on a technical problem of obtaining the configuration information of the grant-free transmission unit, and constitute a technical solution in combination with the embodiment of the method for obtaining configuration information of a grant-free transmission unit described above. A person skilled in the art may understand that configuration herein may be known as scheduling.

When configuring a grant-free transmission unit is an independent technical problem, an embodiment may be as follows.

A network device 2 obtains configuration information of one or more network devices 1, and configures a grant-free transmission unit of the network device 2, so as to implement configuration of the grant-free transmission unit of the network device 2 itself. This can reduce interference on uplink transmission of the network device 1, or can improve uplink transmission performance of the network device 2 when uplink transmission of the network device 1 is not affected, thereby improving uplink transmission performance of an entire network.

One or any combination of the following methods may be used as the configuration method.

### Configuration method 1:

The grant-free transmission unit of the network device 2 is configured, so that the grant-free transmission unit of the network device 2 is orthogonal to the grant-free transmission unit of the one and more network devices 1. Being orthogonal to a grant-free transmission unit may mean being orthogonal to a grant-free transmission unit on transmission resources in any one or more dimensions, such as a time domain, a frequency domain, a space domain, a time-frequency domain, a time-space domain, a space-frequency domain, or a time-frequency-space domain. Being orthogonal may be understood as being not overlapped. For explanation of being orthogonal in other parts in this application document, refer to this explanation. This may be applicable to a case in which uplink granted transmission load of the network device 1 is relatively low. Therefore, optionally, the network device 2 may obtain load information of the network device 1. In addition, if the uplink granted transmission load of the network device 1 is low, the grant-free transmission unit of the network device 2 is configured, so that the grant-free transmission unit of the network device 2 is orthogonal to the grant-free transmission unit of the one and more network devices 1. The load information of the network device 1 may be sent to the network device 2 together or not together with the configuration information of the grant-free transmission unit of the network device 1. If the uplink granted transmission load of the network device 1 is relatively low, interference on uplink granted transmission of the network device 1 is relatively low even if a transmission resource used for the grant-free transmission unit of the network device 2 is overlapped with a transmission resource used for uplink granted transmission of the network device 1.

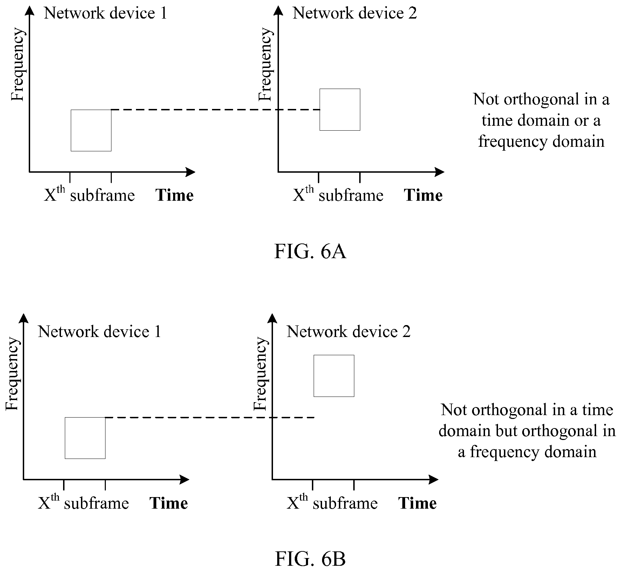

FIG. 6A and FIG. 6B are used as examples. FIG. 6A shows that grant-free transmission units of the network device 1 (one network device 1 is used as an example herein) and the network device 2 are overlapped in a time-frequency domain, which may be understood as non-orthogonal. FIG. 6B shows that the network device 2 configures the grant-free transmission unit of the network device 2 itself, so as to make the grant-free transmission unit of the network device 2 orthogonal to the grant-free transmission unit of the network device 1 in the frequency domain, although non-orthogonal in a time domain.

### Configuration method 2:

Configuring uplink power of the grant-free transmission unit of the network device 2 may specifically be as follows: The network device 2 configures the uplink power of the grant-free transmission unit of the network device 2. The method includes but is not limited to one or more of the following methods: reducing an uplink power upper limit, reducing an uplink power lower limit, reducing an uplink power value, increasing an uplink power upper limit, increasing an uplink power lower limit, increasing an uplink power value, or the like. The method may be applicable both when uplink granted transmission load of the network device 1 is relatively high and when the uplink granted transmission load of the network device 1 is relatively low. For how to perform the configuration according to relatively high or low uplink granted transmission load of the network device 1, refer to the descriptions of the configuration method 1. Uplink power of the grant-free transmission unit of the network device 2 is configured, so that even if the grant-free transmission units of the network device 1 and the network device 2 are non-orthogonal, interference on a terminal device that is within a coverage area of the network device 1 and that performs grant-free transmission can be reduced by reducing the uplink power of the grant-free transmission unit of the network device 2. Alternatively, if the grant-free transmission units of the network device 1 and the network device 2 are orthogonal, the uplink power of the grant-free transmission unit of the network device 2 may be increased to improve signal strength and further improve receive performance.

### Configuration method 3:

The network device 2 configures one or more terminal devices with high uplink channel quality within a coverage area of the network device 2 to use a grant-free transmission unit that is non-orthogonal to the grant-free transmission unit of the one or more first network devices. Alternatively, the second network device configures one or more terminal devices with low uplink channel quality within a coverage area of the second network device to use a grant-free transmission unit that is orthogonal to the grant-free transmission unit of the one or more first network devices. Uplink channel quality may be determined in various manners, for example, by using a distance from the network device 2. If there is a short distance from the network device 2, high uplink channel quality is achieved. If there is a long distance from the network device 2, low uplink channel quality is caused. The method is applicable both when uplink granted transmission load of the network device 1 is relatively high and when the uplink granted transmission load of the network device 1 is relatively low. For a manner in which the configuration is performed according to relatively high or low uplink granted transmission load of the network device 1, refer to the descriptions of the configuration method 1.

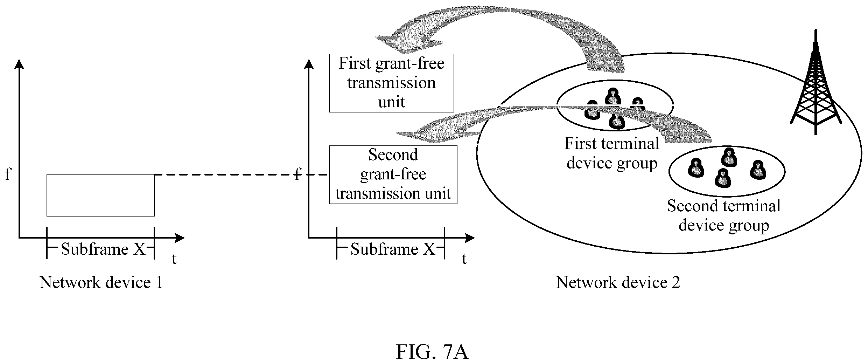

Specifically, as shown in FIG. 7A, a figure on the left shows a grant-free transmission unit of the network device 1. In a figure on the right, a time-domain resource and a frequency-domain resource of a second grant-free transmission unit of the network device 2 are non-orthogonal to a time-domain resource and a frequency-domain resource of the grant-free transmission unit of the network device 1, and a frequency-domain resource of a first grant-free transmission unit of the network device 2 is orthogonal to a frequency-domain resource of the grant-free transmission unit of the network device 1. A first terminal device group includes one or more terminal devices served by the network device 2 that have low uplink channel quality (for example, relatively far from the network device 2), have a grant-free transmission capability, and use a grant-free transmission mode. A second terminal device group includes one or more terminal devices served by the network device 2 that have high uplink channel quality (for example, relatively far from the network device 2), have a grant-free transmission capability, and use a grant-free transmission mode. The network device 2 configures a terminal device in the first terminal device group to use the first grant-free transmission unit to send uplink data, or configures a terminal device in the second terminal device group to use the second grant-free transmission unit to send uplink data.

### Configuration method 4:

The network device 2 configures a terminal device that is within a coverage area of the network device 2 and that uses a granted transmission mode, to perform uplink data transmission by using a granted transmission resource that is orthogonal to the grant-free transmission unit of the one or more first network devices. The method may be applicable when uplink granted transmission load of the network device 1 is relatively low. For a manner in which the configuration is performed according to relatively low uplink granted transmission load of the network device 1, refer to the descriptions of the configuration method 1.

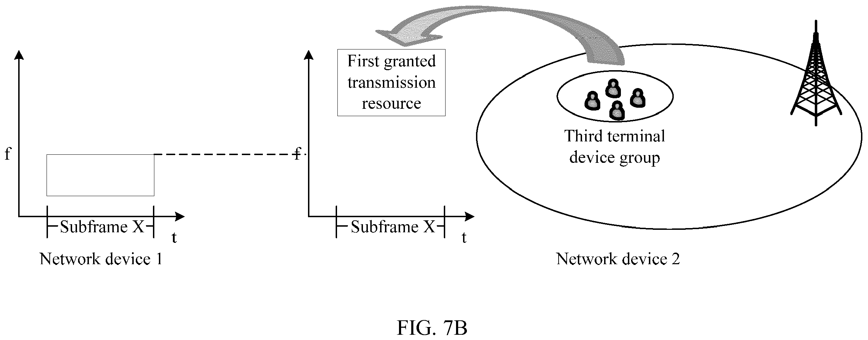

Specifically, as shown in FIG. 7B, a figure on the left shows a grant-free transmission unit of the network device 1, and in a figure on the right, a third terminal device group includes one or more terminal devices of the network device 2 that use a granted transmission mode. A frequency-domain resource of a first granted transmission resource is orthogonal to a frequency-domain resource of the grant-free transmission unit of the network device 1, and the first granted transmission resource is used for granted transmission. The network device 2 configures a terminal device in the third terminal device group to use the first granted transmission resource to send uplink data.

Certainly, the foregoing embodiments of configuring a grant-free transmission unit may be combined with a method for obtaining configuration information of multiple grant-free transmission units described above to form one or more embodiments. Details are not further described herein.

Although descriptions of the foregoing embodiments relate to multiple network devices (for example, the network device 1 and the network device 2) or terminal devices, protection and implementation of the patent's technical solutions may be merely for a single network device.

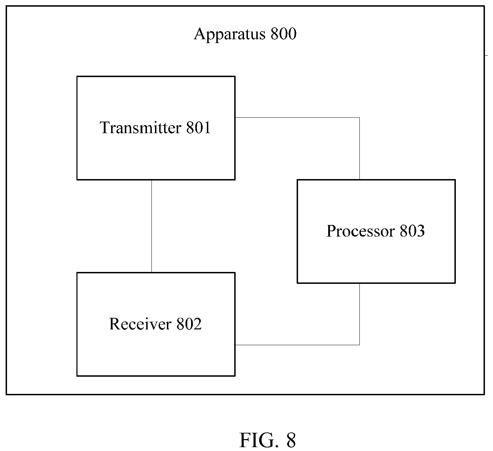

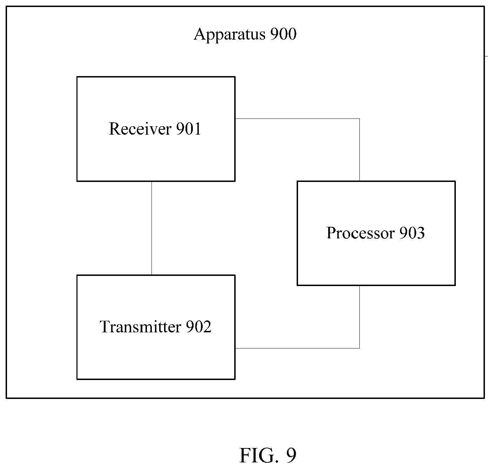

With reference to FIG. 1 to FIG. 7B, the foregoing describes in detail a method for obtaining configuration information of a grant-free transmission unit according to the embodiments of the present invention. With reference to FIG. 8 and FIG. 9, the following describes in detail an apparatus for obtaining configuration information of a grant-free transmission unit according to the embodiments of the present invention.

FIG. 8 describes an apparatus for obtaining configuration information of a grant-free transmission unit. As shown in FIG. 8, the apparatus 800 includes:
a sending unit. Optionally, the sending unit may be a transmitter 801 or the sending unit may be a sending circuit.

Further, optionally, the apparatus 800 includes a receiving unit. Optionally, the receiving unit may be a receiver 802, or the receiving unit may be a receiving circuit, and the sending unit is connected to the receiving unit.

Further, optionally, the apparatus 800 includes a processing unit. Optionally, the processing unit may be a processor 803, or the processing unit may be a processing circuit, and both the sending unit and the receiving unit are connected to the processing unit.

Optionally, the sending unit and the receiving unit may be integrated to form a transceiver unit, the transmitter and the receiver may be integrated to form a transceiver, and the sending circuit and the receiving circuit may be integrated to form a transceiver circuit.

Optionally, any two or more of the sending circuit, the receiving circuit, or the processing circuit may be integrated into one integrated circuit.

The following uses the receiver, the transmitter, and the processor as an example for description.

The transmitter 801 is configured to:
send configuration information of one or more grant-free transmission units of the apparatus, where the grant-free transmission unit indicates a transmission resource used for grant-free transmission, and the configuration information of the grant-free transmission unit includes at least one or more of the following information: information about the grant-free transmission unit or information about a grant-free transmission unit control mechanism.

The information about the grant-free transmission unit is one or more of the following information:
time-domain resource information, frequency-domain resource information, space-domain resource information, code-domain resource information, or pilot resource information.

The information about the grant-free transmission unit control mechanism is one or more of the following information:
uplink power control information, modulation and coding scheme information, or retransmission mechanism information.

Optionally, the transmitter 801 is further configured to send the configuration information of the one or more grant-free transmission units of the apparatus by using any one of the following messages: a load information message, a resource status update message, or a handover request acknowledgement message.

Optionally, the apparatus further includes a receiver 802, configured to receive a message, sent by one or more network devices, for requesting the configuration information of the grant-free transmission unit, and the message for requesting the configuration information of the grant-free transmission unit is used to request the apparatus to send the configuration information of the grant-free transmission unit to the one or more network devices.

Optionally, the transmitter 801 sends a first response message to the one or more network devices, where the first response message is used to indicate that a part of the configuration information of the grant-free transmission unit cannot be sent.

Optionally, the first response message further includes a reason why a part of the configuration information of the grant-free transmission unit cannot be sent.

Optionally, the first response message is a resource status response message.

Optionally, the transmitter 801 sends a second response message to the one or more network devices, where the second response message is used to indicate that all of the configuration information of the grant-free transmission unit cannot be sent.

Optionally, the second response message is a resource status failure message.

Optionally, the apparatus is a base station, a base station controller, or a baseband processing unit set.

Optionally, the processing unit, for example, the processor 803, is configured to control the sending unit, for example, the transmitter 801, to send a signal, and to control the receiving unit, for example, the receiver 802, to receive a signal.

It should be understood that, the apparatus 800 for obtaining configuration information of a grant-free transmission unit according to this embodiment of the present invention may be corresponding to the network device 1 in the method embodiments of the present invention, and the foregoing and other operations and/or functions of each component in the apparatus 800 are to implement a corresponding process of each method in FIG. 2 to FIG. 7B. For brevity, descriptions of the foregoing embodiments of the present invention may be applicable to this apparatus embodiment, and details are not described herein again.

As shown in FIG. 9, an embodiment of the present invention further provides an apparatus 900 for obtaining configuration information of a grant-free transmission unit. The apparatus 900 includes:
a receiving unit. Optionally, the receiving unit may be a receiver 901 or the receiving unit may be a receiving circuit.

Further, optionally, the apparatus 900 includes a sending unit. Optionally, the sending unit may be a transmitter 902, or the sending unit may be a sending circuit, and the sending unit is connected to the receiving unit.

Optionally, the apparatus 900 includes a processing unit. Optionally, the processing unit may be a processor 903, or the processing unit may be a processing circuit, and both the sending unit and the receiving unit are connected to the processing unit.

Optionally, the sending unit and the receiving unit may be integrated to form a transceiver unit, the transmitter and the receiver may be integrated to form a transceiver, and the sending circuit and the receiving circuit may be integrated to form a transceiver circuit.

Optionally, any two or more of the sending circuit, the receiving circuit, or the processing circuit may be integrated into one integrated circuit.

The following uses the receiver, the transmitter, and the processor as an example for description.

The receiver 901 is configured to:
receive configuration information of one or more grant-free transmission units of one or more network devices, where the grant-free transmission unit indicates a transmission resource used for grant-free transmission, and the configuration information of the grant-free transmission unit includes at least one or more of the following information: information about the grant-free transmission unit or information about a grant-free transmission unit control mechanism.

The information about the grant-free transmission unit is one or more of the following information:
time-domain resource information, frequency-domain resource information, space-domain resource information, code-domain resource information, or pilot resource information.

The information about the grant-free transmission unit control mechanism is one or more of the following information:
uplink power control information, modulation and coding scheme information, or retransmission mechanism information.

Optionally, the configuration information of the one or more grant-free transmission units is carried in any one of the following messages: a load information message, a resource status update message, or a handover request acknowledgement message.

Optionally, the apparatus further includes a transmitter 902, configured to send, to the one or more network devices, a message for requesting the configuration information of the grant-free transmission unit, and the message for requesting the configuration information of the grant-free transmission unit is used to request the one or more network devices to send the configuration information of the grant-free transmission unit to the apparatus.

Optionally, the receiver 901 is further configured to receive a first response message sent by the one or more network devices, where the first response message is used to indicate that a part of the configuration information of the grant-free transmission unit cannot be sent.

Optionally, the first response message further includes a reason why a part of the configuration information of the grant-free transmission unit cannot be sent.

Optionally, the first response message is a resource status response message.

Optionally, the receiver 901 is further configured to receive a second response message sent by the one or more network devices, where the second response message is used to indicate that all of the configuration information of the grant-free transmission unit cannot be sent.

Optionally, the second response message is a resource status failure message.

Optionally, the apparatus 900 further includes a processor 903, configured to configure a grant-free transmission unit of the apparatus.

Optionally, the processor 903 further configures the grant-free transmission unit of the apparatus by using one or more of the following methods:
configuring the grant-free transmission unit of the apparatus, so that the grant-free transmission unit of the apparatus is orthogonal to a grant-free transmission unit of the one or more network devices;
configuring uplink power of the grant-free transmission unit of the apparatus;
configuring one or more terminal devices with high uplink channel quality within a coverage area of the apparatus to use a grant-free transmission unit that is non-orthogonal to the grant-free transmission unit of the one or more network devices;
configuring one or more terminal devices with low uplink channel quality within a coverage area of the apparatus to use a grant-free transmission unit that is orthogonal to the grant-free transmission unit of the one or more network devices; or
configuring a terminal device that is within a coverage area of the apparatus and that uses a granted transmission mode, to perform uplink data transmission by using a transmission resource that is orthogonal to the grant-free transmission unit of the one or more network devices.

Optionally, the apparatus is a base station, a base station controller, or a baseband processing unit set.

It should be understood that, the apparatus 900 for obtaining configuration information of a grant-free transmission unit according to this embodiment of the present invention may be corresponding to the network device 2 in the embodiments of the present invention, and the foregoing and other operations and/or functions of each component in the apparatus 900 are to implement a corresponding process of each method in FIG. 2 to FIG. 7B. For brevity, descriptions of the foregoing embodiments of the present invention may be applicable to this apparatus embodiment, and details are not described herein again.

An embodiment of the present invention further relates to a system for obtaining configuration information of a grant-free transmission unit, including the network device 1 and the network device 2 in the foregoing method embodiments. For specific division of structures and functions of the network device 1 and the network device 2, refer to the apparatuses 800 and 900 for obtaining configuration information of a grant-free transmission unit. Descriptions of the foregoing method embodiments and apparatus embodiments may be applicable to the system embodiment, and details are not described herein again.

It should be understood that, in the foregoing embodiments of the present invention, the processor may be a central processing unit (Central Processing Unit, "CPU" for short), or may be another general purpose processor, a digital signal processor (DSP), an application-specific integrated circuit (ASIC), a field programmable gate array (FPGA) or another programmable logic device, a discrete gate or a transistor logic device, or a discrete hardware component. The general purpose processor may be a microprocessor, or the processor may be any conventional processor or the like.

A memory may include a read-only memory and a random access memory, and provide instructions and data to the processor. A part of the memory may further include a non-volatile random access memory. For example, the memory may further store device type information.

In addition to a data bus, a bus system may include a power bus, a control bus, a status signal bus, and the like. However, for clear description, all types of buses in the figure are denoted as the bus system.

In an implementation process, steps in the foregoing methods may be implemented by using a hardware integrated logic circuit in the processor, or by using an instruction in a form of software. The steps of the method disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory or an electrically erasable programmable memory, or a register. The storage medium is located in the memory, and the processor reads information in the memory and completes the steps in the foregoing methods in combination with hardware of the processor. To avoid repetition, no detailed description is given herein again.

It should be understood that, the sending module, the sending unit, or the transmitter in the foregoing embodiments of the present invention may send information directly over an air interface, or send information to another device instead of sending information directly over an air interface, so that the another device sends information directly over the air interface. Similarly, the receiving module, the receiving unit, or the receiver in the foregoing embodiments may receive information directly over an air interface, or receive information over an air interface by using another device instead of receiving information directly over the air interface.

It should be further understood that, to make the application document brief and clear, technical features and descriptions in any of the foregoing embodiments may be applicable to other embodiments. For example, the technical features of one method embodiment may be applicable to the apparatus embodiments or other method embodiments, and details are not further described in other embodiments.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for obtaining configuration information of a grant-free transmission unit, comprising:
sending, by a first network device, configuration information of one or more grant-free transmission units of the first network device to a second network device, wherein the grant-free transmission unit indicates a transmission resource used for grant-free transmission, and the configuration information of the grant-free transmission unit comprises at least one or more of the following information: information about the grant-free transmission unit or information about a grant-free transmission unit control mechanism; and
receiving, by the second network device, the configuration information of the grant-free transmission unit of the first network device, wherein
the information about the grant-free transmission unit is one or more of the following information:
time-domain resource information, frequency-domain resource information, space-domain resource information, code-domain resource information, or pilot resource information; and
the information about the grant-free transmission unit control mechanism is one or more of the following information:
uplink power control information, modulation and coding scheme information, or retransmission mechanism information.

2. The method according to claim 1, comprising:
sending the configuration information of the one or more grant-free transmission units of the first network device by using any one of the following messages:
a load information message;
a resource status update message; or
a handover request acknowledgement message.

3. The method according to claim 1 or 2, further comprising:
sending, by the second network device to the first network device, a message for requesting the configuration information of the grant-free transmission unit, wherein the message for requesting the configuration information of the grant-free transmission unit is used to request the first network device to send the configuration information of the grant-free transmission unit to the second network device.

4. The method according to claim 3, comprising:
if the first network device cannot send a part of the configuration information of the grant-free transmission unit to the second network device, sending, by the first network device, a first response message to the second network device, wherein the first response message is used to indicate that a part of the configuration information of the grant-free transmission unit cannot be sent.

5. The method according to claim 4, wherein
the first response message further comprises a reason why a part of the configuration information of the grant-free transmission unit cannot be sent.

6. The method according to claim 5, wherein
the first response message is a resource status response message.

7. The method according to claim 3, comprising:
if the first network device cannot send all of the configuration information of the grant-free transmission unit to the second network device, sending, by the first network device, a second response message to the second network device, wherein the second response message is used to indicate that all of the configuration information of the grant-free transmission unit cannot be sent.

8. The method according to claim 7, wherein
the second response message is a resource status failure message.

9. The method according to any one of claims 1 to 8, further comprising:
configuring, by the second network device, a grant-free transmission unit of the second network device.

10. The method according to claim 9, wherein
the configuration is specifically performed by using one or more of the following methods:
configuring, by the second network device, the grant-free transmission unit of the second network device, so that the grant-free transmission unit of the second network device is orthogonal to the grant-free transmission unit of the first network device;
configuring, by the second network device, uplink power of the grant-free transmission unit of the second network device;
configuring, by the second network device, one or more terminal devices with high uplink channel quality within a coverage area of the second network device to use a grant-free transmission unit that is non-orthogonal to the grant-free transmission unit of the first network device;
configuring, by the second network device, one or more terminal devices with low uplink channel quality within a coverage area of the second network device to use a grant-free transmission unit that is orthogonal to the grant-free transmission unit of the first network device; or
configuring, by the second network device, a terminal device that is within a coverage area of the second network device and that uses a granted transmission mode, to perform uplink data transmission by using a transmission resource that is orthogonal to the grant-free transmission unit of the first network device.

11. The method according to any one of claims 1 to 10, wherein
the first network device and the second network device are base stations; or
the first network device and the second network device are base station controllers.

12. The method according to any one of claims 1 to 11, wherein
the method is applied to one or more of the following networks: a public land mobilePLMN network, a D2D communications network, an M2M communications network, or a machine type communication MTC network.

13. The method according to any one of claims 1 to 12, wherein the grant-free transmission is one or more of the following:
the grant-free transmission means: An access device pre-allocates multiple transmission resources and notifies a terminal device of the multiple transmission resources; when there is an uplink data transmission requirement, the terminal device selects at least one transmission resource from the multiple transmission resources pre-allocated by the access device, and uses the selected transmission resource to send uplink data; and the access device detects, on one or more of the multiple pre-allocated transmission resources, the uplink data sent by the terminal device;
the grant-free transmission means: An access device pre-allocates multiple transmission resources and notifies a terminal device of the multiple transmission resources, so that when there is an uplink data transmission requirement, the terminal device selects at least one transmission resource from the multiple transmission resources pre-allocated by the access device, and uses the selected transmission resource to send uplink data;
the grant-free transmission means: Information about multiple pre-allocated transmission resources is obtained; and when there is an uplink data transmission requirement, at least one transmission resource is selected from the multiple transmission resources, and uplink data is sent by using the selected transmission resource;
the grant-free transmission means a method for implementing uplink data transmission of a terminal device without dynamic scheduling performed by an access device, wherein the dynamic scheduling is a scheduling manner in which the access device indicates, by using signaling, a transmission resource for each uplink data transmission of the terminal device;
the grant-free transmission means: A terminal device performs uplink data transmission without a grant from an access device, wherein the grant means: A terminal device sends an uplink scheduling request to an access device, and after receiving the scheduling request, the access device sends an uplink grant to the terminal device, wherein the uplink grant is used to indicate an uplink transmission resource allocated to the terminal device; or
the grant-free transmission means a contention-based transmission mode in which multiple terminals simultaneously perform uplink data transmission on a same pre-allocated time-frequency resource without a grant from a base station.

14. A method for obtaining configuration information of a grant-free transmission unit, comprising:
sending, by a first network device, configuration information of one or more grant-free transmission units of the first network device to a second network device, wherein the grant-free transmission unit indicates a transmission resource used for grant-free transmission, and the configuration information of the grant-free transmission unit comprises at least one or more of the following information: information about the grant-free transmission unit or information about a grant-free transmission unit control mechanism; and
the information about the grant-free transmission unit is one or more of the following information:
time-domain resource information, frequency-domain resource information, space-domain resource information, code-domain resource information, or pilot resource information; and
the information about the grant-free transmission unit control mechanism is one or more of the following information:
uplink power control information, modulation and coding scheme information, or retransmission mechanism information.

15. The method according to claim 14, comprising:
sending the configuration information of the one or more grant-free transmission units of the first network device by using any one of the following messages:
a load information message;
a resource status update message; or
a handover request acknowledgement message.

16. The method according to claim 14 or 15, further comprising:
receiving, by the first network device, a message, sent by the second network device, for requesting the configuration information of the grant-free transmission unit, wherein the message for requesting the configuration information of the grant-free transmission unit is used to request the first network device to send the configuration information of the grant-free transmission unit to the second network device.

17. The method according to any one of claims 14 to 16, comprising:
if the first network device cannot send a part of the configuration information of the grant-free transmission unit to the second network device, sending, by the first network device, a first response message to the second network device, wherein the first response message is used to indicate that a part of the configuration information of the grant-free transmission unit cannot be sent.

18. The method according to claim 17, wherein
the first response message further comprises a reason why a part of the configuration information of the grant-free transmission unit cannot be sent.

19. The method according to claim 17 or 18, wherein
the first response message is a resource status response message.

20. The method according to any one of claims 14 to 19, comprising:
if the first network device cannot send all of the configuration information of the grant-free transmission unit to the second network device, sending, by the first network device, a second response message to the second network device, wherein the second response message is used to indicate that all of the configuration information of the grant-free transmission unit cannot be sent.

21. The method according to claim 20, wherein
the second response message is a resource status failure message.

22. A method for obtaining configuration information of a grant-free transmission unit, comprising:
receiving, by a second network device, configuration information, sent by a first network device, of one or more grant-free transmission units of the first network device, wherein the grant-free transmission unit indicates a transmission resource used for grant-free transmission, and the configuration information of the grant-free transmission unit comprises at least one or more of the following information: information about the grant-free transmission unit or information about a grant-free transmission unit control mechanism; and
the information about the grant-free transmission unit is one or more of the following information:
time-domain resource information, frequency-domain resource information, space-domain resource information, code-domain resource information, or pilot resource information; and
the information about the grant-free transmission unit control mechanism is one or more of the following information:
uplink power control information, modulation and coding scheme information, or retransmission mechanism information.

23. The method according to claim 22, comprising:
sending the configuration information of the one or more grant-free transmission units of the first network device by using any one of the following messages:
a load information message;
a resource status update message; or
a handover request acknowledgement message.

24. The method according to claim 22 or 23, further comprising:
sending, by the second network device to the first network device, a message for requesting the configuration information of the grant-free transmission unit, wherein the message for requesting the configuration information of the grant-free transmission unit is used to request the first network device to send the configuration information of the grant-free transmission unit to the second network device.

25. The method according to any one of claims 22 to 24, comprising:
receiving, by the second network device, a first response message sent by the first network device, wherein the first response message is used to indicate that a part of the configuration information of the grant-free transmission unit cannot be sent.

26. The method according to claim 25, wherein
the first response message further comprises a reason why a part of the configuration information of the grant-free transmission unit cannot be sent.

27. The method according to claim 25 or 26, wherein
the first response message is a resource status response message.

28. The method according to any one of claims 22 to 27, comprising:
receiving, by the second network device, a second response message sent by the first network device, wherein the second response message is used to indicate that all of the configuration information of the grant-free transmission unit cannot be sent.

29. The method according to claim 28, wherein
the second response message is a resource status failure message.

30. The method according to any one of claims 22 to 29, further comprising:
configuring, by the second network device, a grant-free transmission unit of the second network device.

31. The method according to claim 30, wherein
the configuration is specifically performed by using one or more of the following methods:
configuring, by the second network device, the grant-free transmission unit of the second network device, so that the grant-free transmission unit of the second network device is orthogonal to the grant-free transmission unit of the first network device;
configuring, by the second network device, uplink power of the grant-free transmission unit of the second network device;
configuring, by the second network device, one or more terminal devices with high uplink channel quality within a coverage area of the second network device to use a grant-free transmission unit that is non-orthogonal to the grant-free transmission unit of the first network device;
configuring, by the second network device, one or more terminal devices with low uplink channel quality within a coverage area of the second network device to use a grant-free transmission unit that is orthogonal to the grant-free transmission unit of the first network device; or
configuring, by the second network device, a terminal device that is within a coverage area of the second network device and that uses a granted transmission mode, to perform uplink data transmission by using a transmission resource that is orthogonal to the grant-free transmission unit of the first network device.

32. An apparatus for obtaining information about a grant-free transmission unit, wherein the apparatus comprises a transmitter, and the transmitter is configured to:
send configuration information of one or more grant-free transmission units of the apparatus, wherein the grant-free transmission unit indicates a transmission resource used for grant-free transmission, and the configuration information of the grant-free transmission unit comprises at least one or more of the following information: information about the grant-free transmission unit or information about a grant-free transmission unit control mechanism, wherein
the information about the grant-free transmission unit is one or more of the following information:
time-domain resource information, frequency-domain resource information, space-domain resource information, code-domain resource information, or pilot resource information; and
the information about the grant-free transmission unit control mechanism is one or more of the following information:
uplink power control information, modulation and coding scheme information, or retransmission mechanism information.

33. The apparatus according to claim 32, wherein the transmitter is further configured to send the configuration information of the one or more grant-free transmission units of the apparatus by using any one of the following messages: a load information message, a resource status update message, or a handover request acknowledgement message.

34. The apparatus according to claim 32 or 33, wherein the apparatus further comprises a receiver, configured to receive a message, sent by one or more network devices, for requesting the configuration information of the grant-free transmission unit, and the message for requesting the configuration information of the grant-free transmission unit is used to request the apparatus to send the configuration information of the grant-free transmission unit to the one or more network devices.

35. The apparatus according to any one of claims 32 to 34, wherein the transmitter sends a first response message to the one or more network devices, and the first response message is used to indicate that a part of the configuration information of the grant-free transmission unit cannot be sent.

36. The apparatus according to claim 35, wherein the first response message further comprises a reason why a part of the configuration information of the grant-free transmission unit cannot be sent.

37. The apparatus according to claim 35 or 36, wherein the first response message is a resource status response message.

38. The apparatus according to any one of claims 32 to 37, wherein the transmitter sends a second response message to the one or more network devices, and the second response message is used to indicate that all of the configuration information of the grant-free transmission unit cannot be sent.

39. The apparatus according to claim 38, wherein the second response message is a resource status failure message.

40. The apparatus according to any one of claims 32 to 39, wherein the apparatus is a base station or a base station controller.

41. An apparatus for obtaining information about a grant-free transmission unit, wherein the apparatus comprises a receiver, and the receiver is configured to:
receive configuration information of one or more grant-free transmission units of one or more network devices, wherein the grant-free transmission unit indicates a transmission resource used for grant-free transmission, and the configuration information of the grant-free transmission unit comprises at least one or more of the following information: information about the grant-free transmission unit or information about a grant-free transmission unit control mechanism; and
the information about the grant-free transmission unit is one or more of the following information:
time-domain resource information, frequency-domain resource information, space-domain resource information, code-domain resource information, or pilot resource information; and
the information about the grant-free transmission unit control mechanism is one or more of the following information:
uplink power control information, modulation and coding scheme information, or retransmission mechanism information.

42. The apparatus according to claim 41, wherein the configuration information of the one or more grant-free transmission units is carried in any one of the following messages: a load information message, a resource status update message, or a handover request acknowledgement message.

43. The apparatus according to claim 41 or 42, wherein the apparatus further comprises a transmitter, configured to send, to the one or more network devices, a message for requesting the configuration information of the grant-free transmission unit, and the message for requesting the configuration information of the grant-free transmission unit is used to request the one or more network devices to send the configuration information of the grant-free transmission unit to the apparatus.

44. The apparatus according to any one of claims 41 to 43, wherein the receiver is further configured to receive a first response message sent by the one or more network devices, and the first response message is used to indicate that a part of the configuration information of the grant-free transmission unit cannot be sent.

45. The apparatus according to claim 44, wherein the first response message further comprises a reason why a part of the configuration information of the grant-free transmission unit cannot be sent.

46. The apparatus according to claim 44 or 45, wherein the first response message is a resource status response message.

47. The apparatus according to any one of claims 41 to 46, wherein the receiver is further configured to receive a second response message sent by the one or more network devices, and the second response message is used to indicate that all of the configuration information of the grant-free transmission unit cannot be sent.

48. The apparatus according to claim 47, wherein the second response message is a resource status failure message.

49. The apparatus according to claims 41 to 48, further comprising a processor, wherein the processor is configured to configure a grant-free transmission unit of the apparatus.

50. The apparatus according to claim 49, wherein the processor is further configured to configure the grant-free transmission unit of the apparatus by using one or more of the following methods:
configuring the grant-free transmission unit of the apparatus, so that the grant-free transmission unit of the apparatus is orthogonal to a grant-free transmission unit of the one or more network devices;
configuring uplink power of the grant-free transmission unit of the apparatus;
configuring one or more terminal devices with high uplink channel quality within a coverage area of the apparatus to use a grant-free transmission unit that is non-orthogonal to the grant-free transmission unit of the one or more network devices;
configuring one or more terminal devices with low uplink channel quality within a coverage area of the apparatus to use a grant-free transmission unit that is orthogonal to the grant-free transmission unit of the one or more network devices; or
configuring a terminal device that is within a coverage area of the apparatus and that uses a granted transmission mode, to perform uplink data transmission by using a transmission resource that is orthogonal to the grant-free transmission unit of the one or more network devices.

51. The apparatus according to any one of claims 41 to 50, wherein the apparatus is a base station or a base station controller.

52. A system for obtaining configuration information of a grant-free transmission unit, comprising the apparatus according to any one of claims 32 to 40 and the apparatus according to any one of claims 41 to 51.
